(19) Europäisches Patentamt
European Patent Office
Office européen des brevets

(11) **EP 2 366 125 B1**

(12) **FASCICULE DE BREVET EUROPEEN**

(45) Date de publication et mention
de la délivrance du brevet:
**05.09.2012 Bulletin 2012/36**

(51) Int Cl.:
***G02F 1/1333*** *(2006.01)*    ***G02B 3/14*** *(2006.01)*

(21) Numéro de dépôt: **09803858.1**

(22) Date de dépôt: **14.12.2009**

(86) Numéro de dépôt international:
**PCT/FR2009/052521**

(87) Numéro de publication internationale:
**WO 2010/076471 (08.07.2010 Gazette 2010/27)**

(54) **ELEMENT OPTIQUE A PUISSANCE VARIABLE**

OPTISCHES ELEMENT MIT VARIABLER OPTISCHER LEISTUNG

OPTICAL ELEMENT WITH VARIABLE OPTICAL POWER

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.12.2008 FR 0858574**

(43) Date de publication de la demande:
**21.09.2011 Bulletin 2011/38**

(73) Titulaires:
• **Essilor International
(Compagnie Générale d'Optique)
94220 Charenton-le-Pont (FR)**
• **Centre National de la Recherche Scientifique - CNRS
75794 Paris Cedex 16 (FR)**

(72) Inventeurs:
• **ARCHAMBEAU, Samuel
F-94220 Charenton (FR)**
• **CAMON, Henri
F-31077 Toulouse Cedex 4 (FR)**
• **MIAS, Solon
F-94220 Charenton-le-Pont (FR)**

(74) Mandataire: **Cabinet Plasseraud
52, rue de la Victoire
75440 Paris Cedex 09 (FR)**

(56) Documents cités:
**FR-A- 2 907 559        US-A1- 2002 140 899
US-A1- 2003 039 770**

**Description**

La présente invention concerne un élément optique à puissance variable.

Elle concerne notamment une lentille optique ou ophtalmique qui possède une puissance variable.

Des lentilles d'objectifs d'appareils de projection existent déjà, qui possèdent chacune une puissance optique variable. Par exemple, la puissance optique de la lentille peut être variée électriquement, par application d'une tension électrique appropriée entre deux électrodes qui sont portées par cette lentille. De cette façon, une image qui est formée sur un écran par l'appareil de projection peut être mise au point («focussed») sans que des pièces mécaniques soient déplacées. La mise au point peut alors être réalisée avec un temps de réponse très court, et le coût de fabrication de l'objectif est diminué.

De façon connue, un tel élément optique à puissance variable comprend :

- un substrat, qui peut être lui-même une lentille;

- un réservoir qui s'étend parallèlement à une face du substrat, et qui contient un cristal liquide nématique ou cholestérique ; et

- un système de polarisation commandable, qui est adapté pour provoquer des changements entre une orientation homéotrope et une orientation planaire du cristal liquide contenu dans le réservoir.

Par exemple, le système de polarisation comprend une électrode de référence, transparente et continue, qui est disposée parallèlement à la face du substrat sur un premier côté du réservoir. Il comprend aussi un ensemble d'électrodes de polarisation, qui sont transparentes et isolées les unes des autres, et qui sont disposées sur un second côté du réservoir, aussi parallèlement à la face du substrat. Les électrodes de polarisation sont en outre circulaires et concentriques, et des tensions électriques peuvent être appliquées simultanément et respectivement aux électrodes de polarisation, par rapport à l'électrode de référence.

Lorsqu'aucune tension électrique n'est appliquée, le cristal liquide adopte une orientation spontanée qui est uniforme sur toute la face du substrat. Cette orientation spontanée est en général déterminée par une couche mince de polyimide qui est brossée et en contact avec le cristal liquide. Elle peut être planaire, par exemple. Lorsqu'une tension électrique est appliquée entre l'électrode de référence et l'une des électrodes de polarisation, le cristal liquide qui est situé au niveau de cette électrode de polarisation est dévié d'un angle qui croît avec la valeur de la tension électrique. Ainsi, en appliquant simultanément aux électrodes de polarisation des tensions électriques qui croissent en fonction de leur rayon, le cristal liquide adopte de nouvelles orientations qui varient progressivement entre le centre et une zone périphérique du réservoir. Par exemple, la tension électrique qui est appliquée à l'électrode de polarisation centrale peut être nulle, de sorte que l'orientation planaire du cristal liquide est conservée au centre du réservoir. Une autre tension électrique est appliquée en même temps à l'électrode de polarisation la plus externe, qui met le cristal liquide dans l'orientation homéotrope à cet endroit du réservoir. Les tensions électriques des électrodes intermédiaires produisent la variation progressive de l'orientation du cristal liquide entre le centre et le bord périphérique.

Le cristal liquide présente alors localement une valeur apparente d'indice de réfraction qui varie entre la valeur pour l'orientation planaire et celle pour l'orientation homéotrope, pour un faisceau lumineux qui traverse l'élément optique perpendiculairement à la face du substrat qui porte le réservoir.

De façon connue, un cristal liquide nématique ou cholestérique possède une valeur d'indice ordinaire, notée $n_o$, et une valeur d'indice extraordinaire, notée ne. La valeur apparente de l'indice de réfraction est $n_o$ dans la zone périphérique du réservoir où le cristal liquide possède l'orientation homéotrope, et elle est égale à $(ne + n_o)/2$ au centre du réservoir où le cristal liquide possède l'orientation planaire. La différence apparente d'indice de réfraction entre le centre et la zone périphérique du réservoir est donc de

$(ne - n_o)/2 = \Delta n/2$ dans l'état polarisé, et est nulle en l'absence de tension de polarisation.

Si l'électrode la plus externe est circulaire avec un rayon R, alors l'effet optique du cristal liquide est équivalent à celui d'une lentille additionnelle de puissance optique P donnée par la relation suivante :

$$P = e \cdot \Delta n / R^2 , \qquad (1)$$

où e est l'épaisseur du réservoir. Selon le signe de $\Delta n$, la lentille équivalente est convergente ou divergente lorsque le système de polarisation est activé. Lorsque le système de polarisation n'est pas activé, le réservoir n'a pas d'effet optique, correspondant à une puissance optique qui est nulle.

La variation de puissance optique de l'élément entre les deux états est donc limitée par la valeur de l'écart

d'indice $\Delta n = ne - n_o$ pour le cristal liquide utilisé. Or cette limite peut être trop basse pour une application déterminée, et ce quelque soit le cristal liquide qui est utilisé.

Pour augmenter la variation de la puissance optique de la lentille équivalente à l'élément qui vient d'être décrit, il est connu d'ajouter des polariseurs linéaires de chaque côté du réservoir de cristaux liquides, parallèlement à la direction d'alignement planaire des cristaux liquides. La valeur apparente de l'indice de réfraction pour l'orientation planaire des cristaux liquides est alors $n_e$, la différence apparente d'indice de réfraction entre le centre et la zone périphérique du réservoir est $\Delta n$ dans l'état polarisé, et la variation de la puissance optique entre les deux états non-polarisé et polarisé est $2 \cdot e \cdot \Delta n / R^2$. La variation de la puissance optique est donc doublée, mais les polariseurs provoquent une réduction de plus de moitié de la transmission lumineuse de l'élément optique pour de la lumière naturelle, ce qui n'est pas compatible avec de nombreuses applications.

Par ailleurs, des éléments optiques transparents existent aussi, qui incorporent des cristaux liquides contenus dans des cellules fermées. Un tel élément optique comprend un substrat et un ensemble transparent de cellules séparées, qui sont juxtaposées parallèlement à une face du substrat. La structure cellulaire permet de varier des compositions de mélanges qui sont contenus dans des cellules distinctes, et que ces compositions soient permanentes pendant toute la durée de vie de l'élément.

Un élément optique est aussi connu du document FR-A-2 907 559.

Un but de la présente invention est de fournir de nouveaux éléments optiques à puissance variable, dont la variation de la puissance optique est supérieure à celles d'éléments déjà connus.

Pour cela, l'invention propose un élément optique à puissance variable, qui comprend :

- un substrat ;

- un ensemble transparent de cellules séparées et fermées, qui sont juxtaposées parallèlement à une face du substrat ; et

- un système de polarisation commandable, qui est adapté pour provoquer des changements entre une orientation homéotrope et une orientation planaire de cristaux liquides nématiques ou cholestériques contenus dans les cellules.

Dans le cadre de la présente description, on entend par transparence la possibilité de voir distinctement un objet ou une scène quelconque à travers l'ensemble de cellules. Autrement dit, la lumière qui traverse l'ensemble de cellules n'est pas affectée d'une manière qui pourrait brouiller la vision. En particulier, elle n'est pas diffusée ni diffractée, si bien qu'une source lumineuse ponctuelle qui est située à distance de l'élément optique est perçue comme un point à travers l'ensemble de cellules.

Un élément optique selon l'invention est tel qu'au moins une cellule qui est située à proximité d'un point central de la face du substrat contient un premier cristal liquide nématique ou cholestérique, et des cellules qui sont situées à distance de ce point central contiennent un mélange de ce premier cristal liquide avec un second cristal liquide nématique ou cholestérique différent du premier cristal liquide. De plus, une proportion du second cristal liquide par rapport au premier cristal liquide dans le mélange à l'intérieur de chaque cellule augmente en fonction de la distance radiale entre cette cellule et le point central de la face du substrat. Cette augmentation de la proportion dans chaque cellule en fonction de la distance radiale, est en outre adaptée de sorte que l'élément optique présente une première ou une seconde valeur de puissance optique pour un faisceau lumineux qui traverse l'ensemble de cellules, en fonction d'une commande appliquée au système de polarisation.

De plus, l'élément optique selon l'invention est tel que, le système de polarisation commandable comprend deux électrodes transparentes qui sont situées en vis-à-vis et s'étendent chacune parallèlement à la face du substrat. L'ensemble de cellules est alors situé entre les deux électrodes, de sorte que celles-ci produisent un champ électrique dans toutes les cellules lorsqu'une tension électrique est appliquée entre les électrodes. De plus, les premier et second cristaux liquides ont respectivement une première et une seconde anisotropie diélectrique avec des signes respectifs qui sont opposés. Le système est agencé en outre pour qu'une variation de la tension électrique qui est appliquée entre les deux électrodes provoque un changement entre une orientation du type planaire et une orientation du type homéotrope pour l'un parmi les premier et second cristaux liquides, et provoque simultanément un changement inverse entre ces types d'orientation pour l'autre cristal liquide, dans celles des cellules qui contiennent du premier cristal liquide sans second cristal liquide ou du second cristal liquide sans premier cristal liquide.

Ainsi, un élément optique selon l'invention incorpore deux cristaux liquides, qui sont mélangés dans des proportions variables à l'intérieur de cellules différentes. Ces proportions sont permanentes, grâce au placement de chaque mélange dans des cellules séparées qui sont fermées. De cette façon, les contenus de cellules voisines ne sont pas en contact, et ne peuvent diffuser d'une cellule à l'autre.

En outre, grâce à la variation progressive des proportions des mélanges qui sont contenus dans des cellules de plus en plus éloignées du centre de la face du substrat, et en commandant le système de polarisation de façon appropriée, il est possible de contrôler simultanément les orientations respectives du premier cristal liquide au centre de la face du substrat, et du second cristal liquide dans une zone périphérique du substrat. Ainsi, le premier cristal liquide peut avoir une première orientation au centre du substrat, et le second cristal liquide peut avoir en même temps une seconde orientation dans la zone périphérique, avec une variation continue de l'orientation des mélanges qui sont contenus dans les cellules intermédiaires entre le centre et la zone périphérique. Une sélection convenable du premier et du second cristal liquide, ainsi que de leurs orientations respectives, permet donc de combiner leurs écarts respectifs $\Delta n$ entre les deux indices de réfraction extraordinaire ne et ordinaire $n_o$ du même cristal liquide, de sorte que la puissance optique de l'élément présente une variation accrue entre les deux états de commande, par rapport à un élément optique qui ne contiendrait que le premier ou que le second cristal liquide.

Des éléments optiques conformes à l'invention peuvent alors être utilisés pour un nombre supérieur d'applications. En particulier, ils peuvent être utilisés dans des instruments de projection d'images, des instruments optiques d'observation ou de visée, ou des applications ophtalmiques.

En outre, un élément optique conforme à l'invention présente des dimensions et un encombrement qui sont sensiblement identiques à ceux d'un élément optique à puissance variable tel que connu auparavant.

Le poids de l'élément optique peut aussi être sensiblement identique à celui du substrat, ce qui est particulièrement avantageux pour une application ophtalmique, notamment.

Une variation plus importante entre les puissances optiques de l'élément qui sont produites dans deux états extrêmes de polarisation, peut être obtenue dans les conditions suivantes :

- au moins une cellule qui est située à proximité du point central de la face du substrat contient du premier cristal liquide sans contenir du second cristal liquide ; et/ou

- des cellules qui sont situées au voisinage d'un bord périphérique du substrat contiennent du second cristal liquide sans contenir du premier cristal liquide.

Un avantage de l'élément optique selon l'invention réside dans la possibilité d'utiliser des électrodes qui sont continues pour produire le champ électrique de polarisation dans les cellules. De telles électrodes peuvent être formées simplement, sans étape de gravure, de sorte que le prix de revient de l'élément optique est réduit.

Selon un exemple comparatif d'élément optique, le système de polarisation commandable peut comprendre deux réseaux transparents d'électrodes, qui s'étendent en vis-à-vis chacun parallèlement à la face du substrat. L'ensemble de cellules est alors situé entre les deux réseaux d'électrodes, de sorte que ceux-ci produisent un champ électrique dans certaines au moins des cellules lorsqu'un adressage de ces cellules est commandé. Cet exemple comparatif peut être adapté, en particulier, lorsque les premier et second cristaux liquides ont des seuils respectifs pour le champ électrique qui sont différents, afin de déclencher simultanément des changements d'orientation de ces cristaux liquides dans des cellules où ils sont présents sous forme non mélangée. Il est également adapté au cas où les premier et second cristaux liquides présentent des anisotropies diélectriques respectives qui ont des signes identiques.

De façon générale, pour améliorer un contrôle de l'état de l'élément optique lorsqu'aucun signal de commande n'est adressé au système de polarisation, l'élément optique peut comprendre en outre des portions de surface d'ancrage des cristaux liquides à l'intérieur des cellules. Ces portions de surface d'ancrage sont alors adaptées pour fixer une orientation du premier ou second cristal liquide dans celles des cellules qui contiennent ce cristal liquide sans contenir de l'autre cristal liquide, lorsque le système de polarisation commandable n'est pas activé.

Enfin, le substrat de l'élément optique peut comprendre lui-même une lentille optique ou une portion de lentille optique. L'ensemble de cellules qui contient les cristaux liquides produit alors une puissance optique additionnelle variable, qui se combine avec la puissance optique de la lentille du substrat.

D'autres particularités et avantages de la présente invention apparaîtront dans la description ci-après d'exemples de réalisation non limitatifs, en référence aux dessins annexés, dans lesquels :

- la figure 1 est une coupe transversale d'un premier élément optique selon l'invention ;

- les figures 2a et 2b sont des grossissements d'une partie de la figure 1, illustrant deux états distincts de l'élément optique ; et

- les figures 3 et 4 représentent deux autres éléments optiques, la figure 3 un exemple comparatif et la figure 4 un exemple selon l'invention.

Pour raison de clarté de ces figures, les dimensions des éléments représentés ne correspondent ni à des dimensions réelles, ni à des rapports de dimensions réels. En outre, des références identiques sur des figures distinctes désignent des éléments identiques ou qui ont des fonctions identiques.

Dans ce qui suit, les éléments techniques qui sont bien connus de l'Homme du métier ne sont pas repris en détail. En particulier, on pourra se reporter aux documents qui sont disponibles par ailleurs en ce qui concerne le mode de réalisation de l'ensemble de cellules, ainsi qu'en ce qui concerne la structure et l'utilisation de cristaux liquides.

L'invention est maintenant décrite dans le cas particulier d'une application ophtalmique, mais il est entendu que celle-ci n'est pas limitative. A la lecture de cette description, l'Homme du métier saura adapter les paramètres nécessaires pour appliquer l'invention à d'autres domaines.

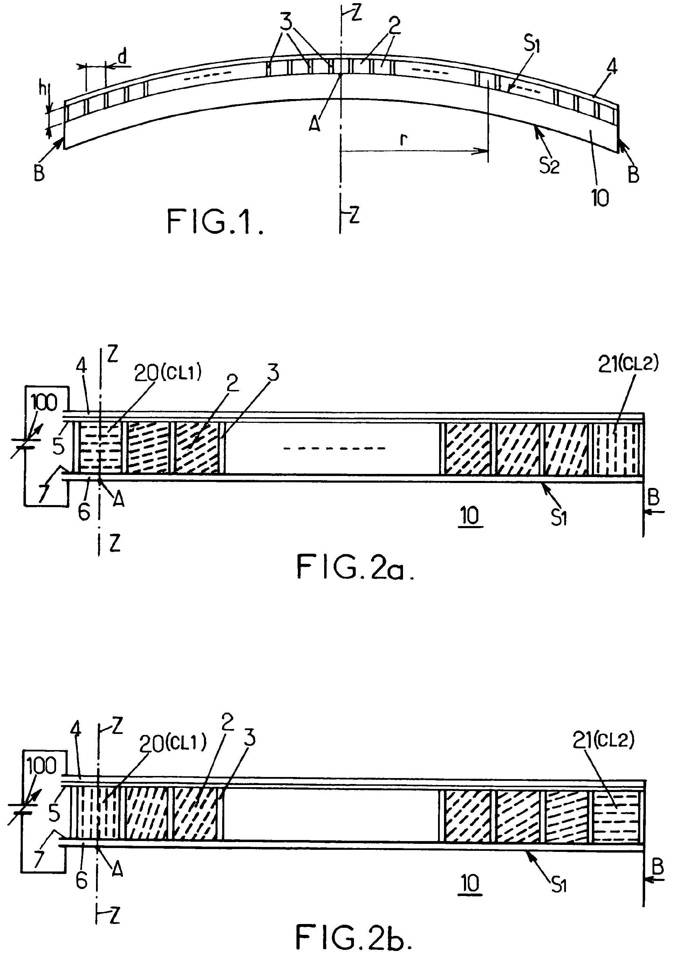

Conformément à la figure 1, un substrat 10 comprend une lentille ophtalmique, ou une portion de lentille ophtalmique lorsque la variation de puissance optique qui est recherchée est limitée à une partie restreinte d'un verre de lunettes. De façon connue, une telle lentille ophtalmique peut être un verre semi-fini, dont une seule face possède une forme définitive. Alternativement, ce peut être un verre fini dont les deux faces ont déjà leurs formes définitives. Lorsqu'il s'agit d'un verre fini, celui-ci peut encore posséder le bord périphérique du verre semi-fini, par exemple un bord circulaire de 60 cm (centimètre) de diamètre, ou avoir déjà été détouré aux dimensions d'un logement de monture de lunettes dans lequel il est destiné à être assemblé.

Les faces antérieure et postérieure de la lentille 10 sont désignées respectivement par $S_1$ et $S_2$. La face $S_1$ est convexe et la face $S_2$ est concave. Pour raison de clarté des figures 2a et 2b, la face S1 de la lentille 10 est représentée plane dans ces deux figures, mais il est entendu qu'elle peut être en réalité convexe comme il vient d'être décrit. La structure cellulaire qui est nécessaire pour mettre en oeuvre l'invention peut être disposée sur l'une ou l'autre des deux faces $S_1$ et $S_2$. Eventuellement, deux ou plusieurs telles structures cellulaires peuvent être associées dans le même verre de lunettes, en étant superposées sur l'une des faces $S_1$ ou $S_2$, ou réparties sur ces deux faces. B désigne le bord périphérique de la lentille 10, qui est soit le bord du verre semi-fini, soit le bord du verre de lunettes après qu'il a été détouré.

Par exemple, un ensemble de cellules 2 recouvre continûment la face $S_1$ jusqu'au bord périphérique B. L'ensemble des cellules 2 est défini par un réseau de parois 3, dont chaque paroi sépare deux cellules adjacentes. Les parois 3 s'étendent sensiblement perpendiculairement à la face $S_1$, avec une hauteur h qui peut être comprise entre 5 et 100 μm (micromètre). Par exemple, la hauteur h peut être égale à 20 μm. Les cellules 2 sont chacune hermétiquement fermées, par exemple avec un film de scellement 4 qui est continu et fixé sur les sommets des parois 3 opposés à la lentille 10. Les dimensions de chaque cellule 2 parallèlement à la face $S_1$ peuvent être comprises entre 10 et 200 μm, par exemple sensiblement égales à 50 μm.

Z-Z indique un axe de symétrie de révolution pour les proportions des cristaux liquides qui sont contenus dans les cellules 2. Autrement dit, ces proportions varient en fonction de la distance radiale r qui est mesurée entre l'axe Z-Z et chaque cellule 2. L'axe Z-Z peut coïncider avec un axe de la lentille 10, qui est de préférence l'axe optique de celle-ci. A désigne un point central de la face $S_1$. Pour raison de simplicité, on supposera dans la suite que l'axe Z-Z passe par le point A, sauf mention du contraire.

La référence 20 désigne une cellule 2 qui est située au point A, ou proche de celui-ci. La référence 21 désigne une cellule 2 qui est située à proximité du bord périphérique B. La référence 2 est gardée pour désigner génériquement une cellule 2 quelconque.

Sur les figures 2a et 2b, les références 5 et 6 désignent deux électrodes qui sont situées respectivement au dessus et au dessous de l'ensemble des cellules 2, selon l'axe Z-Z. L'électrode 5 peut être portée par le film 4, et l'électrode 6 peut être portée par la face $S_1$ de la lentille 10. Ces électrodes 5 et 6 sont constituées d'un matériau conducteur électriquement, qui peut être par exemple de l'oxyde d'indium dopé à l'étain (ITO pour «indium-tin oxide» en anglais). Elles ont chacune une épaisseur qui peut être comprise entre 0,01 et 0,5 μm, par exemple. Les électrodes 5 et 6 sont continues dans le mode de réalisation de l'invention qui est maintenant décrit, et ont chacune la même extension que la face $S_1$. Une alimentation électrique ajustable 100 est connectée électriquement aux électrodes 5 et 6. Lorsque cette alimentation électrique 100 produit une tension électrique non nulle, les électrodes 5 et 6 créent un champ électrique qui est sensiblement identique dans toutes les cellules 2. L'alimentation 100 et les électrodes 5 et 6 constituent ensemble le système de polarisation commandable qui permet d'orienter les cristaux liquides contenus dans les cellules 2.

Deux cristaux liquides nématiques ou cholestériques, qui sont notés dans la suite CL1 et CL2, sont répartis dans les cellules 2, avec des proportions qui varient en fonction de la distance radiale r. En particulier, la proportion de CL2 à l'intérieur de chaque cellule 2 augmente avec la distance r.

Sans que cela constitue une limitation générale de l'invention, on supposera que la proportion de CL2 est nulle dans la cellule 20, et est égale à 1,00 dans les cellules 21. Par exemple, cette proportion de CL2 peut être sensiblement égale à $(r/R)^2$, où R est le rayon du bord circulaire B. Evidemment, une telle variation de la proportion n'est réalisée que pour des valeurs discrètes de la distance radiale r, qui correspondent à des points de référence respectifs des cellules 2, par exemple à des centres de celles-ci. En outre, les variations de la proportion de CL2 entre des cellules différentes peuvent être des multiples d'un incrément fixe, qui dépend de la technique utilisée pour mélanger les cristaux liquides CL1 et CL2. La proportion de CL1 dans chaque cellule 2 est complémentaire de celle de CL2, lorsque les mélanges ne comportent que deux composantes.

D'une façon connue, lorsqu'aucun système de polarisation n'est activé, des cristaux liquides adoptent une orientation qui est fixée par une surface d'ancrage avec laquelle ils sont en contact. Une telle surface d'ancrage peut être constituée d'un polymère, qui possède une texture superficielle orientée. En l'absence de champ de polarisation externe, la surface d'ancrage peut orienter des cristaux liquides nématiques ou cholestériques soit de façon planaire, soit de façon homéotrope. Cette orientation dépend des cristaux liquides eux-mêmes, du polymère de la surface d'ancrage, du type de texturation de cette surface, ainsi que de la nature de l'interaction entre les cristaux liquides et le polymère.

On rappelle que les cristaux liquides CL1 ou CL2 ont une orientation planaire lorsqu'ils sont parallèles à la face $S_1$. Dans ce cas, cette orientation peut varier à l'intérieur d'une même cellule 2, entre des surfaces qui sont parallèles à la face $S_1$ et situées à des hauteurs différentes selon l'axe Z-Z. L'orientation homéotrope correspond des cristaux liquides CL1 ou CL2 qui sont perpendiculaires à la face $S_1$.

La référence 7 désigne une couche de polymère qui forme une surface d'ancrage. Elle peut être continue et disposée entre l'électrode 6 et le réseau de parois 3. Alternativement, la couche 7 peut être portée par l'électrode 5, ou être formée de portions disjointes qui coïncident avec les volumes internes des cellules 2. Eventuellement, des portions de surface d'ancrage peuvent aussi être portées par les parois 3. Dans tous les cas, elles sont directement en contact avec les cristaux liquides qui sont contenus dans les cellules 2.

Ces portions de surface d'ancrage peuvent adaptées pour que, lorsque le système de polarisation commandable n'est pas activé, le premier cristal liquide possède une orientation planaire dans celles des cellules qui contiennent de ce premier cristal liquide sans second cristal liquide, et pour que le second cristal liquide possède simultanément l'orientation homéotrope dans celles des cellules qui contiennent du second cristal liquide sans premier cristal liquide. Autrement dit, CL1 possède une orientation planaire à l'intérieur de la cellule 20 et CL2 possède l'orientation homéotrope dans les cellules 21, ou vice-versa, lorsque l'alimentation 100 délivre une tension nulle ou est déconnectée de l'une au moins des électrodes 5 ou 6. Une fois que les cristaux liquides CL1 et CL2 sont sélectionnés, l'Homme du métier sait déterminer la couche 7 pour obtenir simultanément deux orientations opposées, planaire et homéotrope, pour CL1 et CL2 respectivement dans les cellules 20 et 21. Eventuellement, les portions de surface d'ancrage peuvent être variées entre les cellules 20 et 21 pour obtenir un tel état de l'élément optique en l'absence de polarisation électrique.

La figure 2a représente l'élément optique lorsque les cristaux liquides CL1 ont une orientation planaire à l'intérieur de la cellule 20, et les cristaux liquides CL2 ont simultanément l'orientation homéotrope à l'intérieur des cellules 21. Entre la cellule 20 et les cellules 21, les cristaux liquides adoptent une orientation intermédiaire qui est oblique, et qui dépend des proportions de CL1 et CL2 dans chaque cellule 2. Etant donné que la proportion de CL2 augmente avec la distance radiale r, l'orientation à l'intérieur des cellules devient progressivement plus verticale lorsque r augmente. Cet état de l'élément optique peut être spontané en l'absence de tension électrique délivrée par l'alimentation 100.

En outre, les cristaux liquides CL1 et CL2 possèdent des anisotropies diélectriques qui ont des signes opposés. On rappelle que l'anisotropie diélectrique AD d'un cristal liquide désigne la différence relative entre les carrés de ses valeurs d'indice de réfraction respectivement ordinaire $n_o$ et extraordinaire $n_e$, soit : $AD = (n_e^2 - n_o^2)/n_o^2$. Autrement dit, les cristaux liquides CL1 et CL2 adoptent l'un une orientation planaire et l'autre l'orientation homéotrope pour une valeur suffisante de la tension électrique qui est appliquée entre les deux électrodes 5 et 6.

La figure 2b représente l'élément optique dans l'état de polarisation qui est opposé à celui de la figure 2a : l'orientation des cristaux liquides CL1 est homéotrope à l'intérieur de la cellule 20, et l'orientation des cristaux liquides CL2 est simultanément planaire à l'intérieur des cellules 21. Cet état correspond à une valeur de la tension électrique produite par l'alimentation 100, qui est supérieure aux seuils de basculement respectifs de CL1 et CL2.

Dans l'état de la figure 2a, le cristal liquide CL1 présente la valeur apparente de l'indice de réfraction $(n_{e1} + n_{o1})/2$ dans la cellule 20, où $n_{o1}$ et $n_{e1}$ sont respectivement les indices de réfraction lumineuse ordinaire et extraordinaire de CL1. Dans le cadre de la présente description, on désigne par valeur (resp. variation) apparente d'indice de réfraction lumineuse une valeur (resp. variation) qui affecte des rayons lumineux traversant l'élément optique sensiblement perpendiculairement à la face $S_1$. Simultanément, le cristal liquide CL2 présente la valeur apparente d'indice de réfraction $n_{o2}$ dans les cellules 21, où $n_{o2}$ est l'indice de réfraction ordinaire de CL2. La différence apparente d'indice entre le bord B et le point central A pour ce premier état est alors :

$$\Delta_1 = n_{o2} - (n_{e1} + n_{o1})/2 \, , \qquad\qquad (2)$$

correspondant à une première valeur de puissance optique $P_1 = 2\text{-}e\text{-}\Delta_1 / R^2$.

D'une façon similaire, la variation apparente d'indice entre le bord B et le point A dans l'état de la figure 2b est :

$$\Delta_2 = (n_{e2} + n_{o2})/2 - n_{o1} \, , \qquad\qquad (3)$$

où $n_{e2}$ est l'indice de réfraction extraordinaire de CL2. La valeur correspondante de la puissance optique de l'élément est alors: $P_2 = 2 \cdot e \cdot \Delta_2 / R^2$.

La variation $\Delta P$ entre les valeurs $P_1$ et $P_2$ de la puissance optique, est donc :

$$\Delta P \quad = P_2 - P_1$$

$$= (\Delta_2 - \Delta_1) 2 \cdot e / R^2$$

$$= [(n_{e2} - n_{o2})/2 + (n_{e1} - n_{o1})/2] \cdot 2 \cdot e / R^2$$

$$= (\Delta n_1 + \Delta n_2) \cdot e / R^2$$

où $\Delta n_1$ et $\Delta n_2$ sont les différences entre les indices extraordinaire et ordinaire, respectivement pour les cristaux liquides CL1 et CL2.

En utilisant un formalisme identique à celui de la relation (1), on obtient :

$$\Delta P \quad = \Delta P_1 + \Delta P_2$$

Ainsi, les variations de puissance optique $\Delta P_1$ et $\Delta P_2$ se combinent de façon additive dans l'élément optique selon l'invention qui a été décrit, par rapport à un élément optique à un seul cristal liquide tel que connu auparavant. Un choix convenable des deux cristaux liquides CL1 et CL2 fournit donc une variation $\Delta P$ qui peut être supérieure, en valeur absolue, à chacune des variations $\Delta P_1$ et $\Delta P_2$ qui serait obtenue séparément en utilisant le premier cristal liquide seul ou le second cristal liquide seul.

Lorsque les cristaux liquides CL1 et CL2 vérifient en outre la condition suivante :

$$n_{o2} < (n_{o1} + n_{e1})/2 \ , \qquad\qquad (4)$$

alors la différence apparente $\Delta_1$ d'indice entre les cellules 21 d'une part, et la cellule 20 d'autre part, pour l'état de la figure 2a, est négative. La valeur de puissance optique $P_1$ est aussi négative, correspondant à un effet optique de l'élément qui est du même type que celui d'une lentille divergente.

Si les cristaux liquides CL1 et CL2 vérifient aussi la condition :

$$n_{o1} < (n_{o2} + n_{e2})/2 \ , \qquad\qquad (5)$$

alors la différence apparente d'indice $\Delta_2$ pour l'état de la figure 2b, est positive, de même que la valeur de puissance optique $P_2$. L'élément a alors un effet optique qui est du même type que celui d'une lentille convergente.

Enfin, si les cristaux liquides CL1 et CL2 vérifient les deux conditions (4) et (5), alors la puissance optique change de signe entre les deux états de commande. Autrement dit, l'élément optique passe d'un comportement de lentille convergente à celui d'une lentille divergente, de façon contrôlée et réversible.

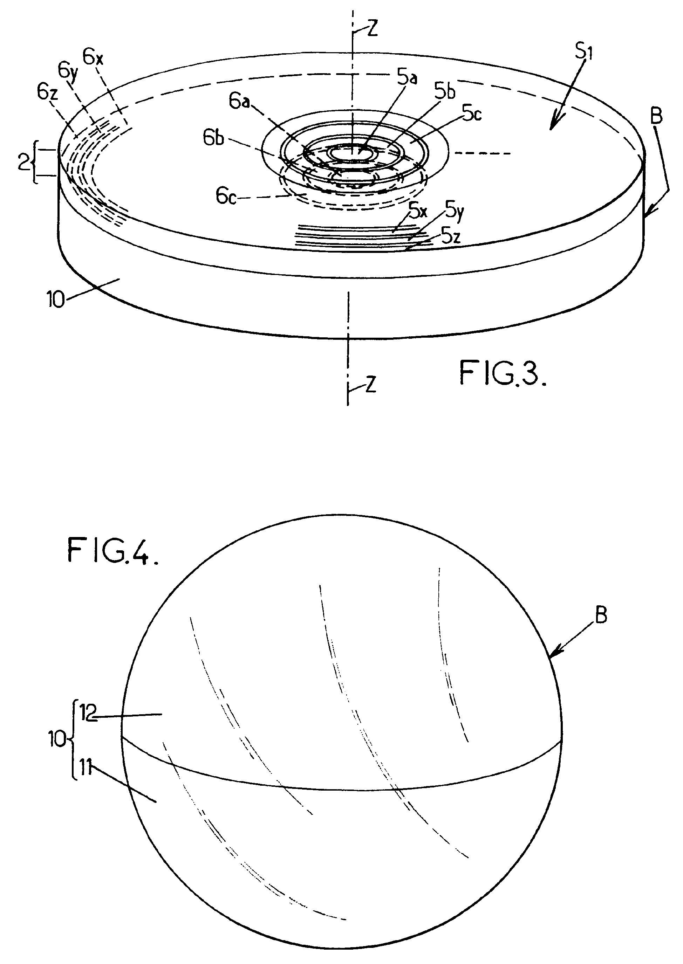

La figure 3 est une vue en perspective d'un exemple comparatif, dans laquelle les électrodes continues 5 et 6 sont remplacées par deux réseaux transparents d'électrodes. Ceux-ci s'étendent en vis-à-vis chacun parallèlement à la face $S_1$, et l'ensemble des cellules 2 est situé entre ces deux réseaux d'électrodes. De cette façon, les réseaux d'électrodes produisent un champ électrique dans certaines au moins des cellules 2 lorsqu'un adressage de ces cellules est commandé. Sur la figure, les références 5a,..., 5z et 6a,..., 6z désignent individuellement les électrodes de chaque réseau. Par exemple, les électrodes de chaque réseau peuvent être circulaires et concentriques autour de l'axe Z-Z. L'utilisation de tels réseaux d'électrodes permet de mieux contrôler électriquement l'orientation oblique des cristaux liquides dans les cellules 2 qui sont intermédiaires entre la cellule centrale 20 et les cellules périphériques 21. Pour cela, des tensions électriques appropriées, qui varient progressivement en fonction de la distance radiale r, peuvent être appliquées à chaque couple d'électrodes en vis-à-vis. Des aberrations optiques peuvent aussi être réduites de cette façon, pour un faisceau lumineux qui traverse l'élément optique.

Eventuellement, une seule des électrodes 5 ou 6 peut être remplacée par un réseau d'électrodes comme décrit précédemment. Dans ce cas, l'électrode continue restante peut constituer une surface de référence de potentiel électrique.

Lorsque le système de polarisation commandable est du type à champ électrique, avec au moins un réseau d'électrodes permettant de produire des intensités du champ électrique qui sont différentes dans la cellule 20 et les cellules 21, alors il n'est pas indispensable que les anisotropies diélectriques respectives des deux cristaux liquides CL1 et CL2 soient de signes opposés. En effet, les deux états des figures 2a et 2b peuvent être obtenus en produisant dans la cellule 20 et les cellules 21, pour chacun de ces états, des intensités du champ électrique qui sont appropriées par rapport aux valeurs-limites de changement d'orientation pour chaque cristal liquide. De même, l'utilisation de portions de surface d'ancrage peut ne pas être indispensable pour certains couples de cristaux liquides CL1 et CL2.

Conformément à la figure 4, l'invention peut être appliquée à l'intérieur d'une portion seulement du substrat 10, pour obtenir une lentille multifocale. La figure 4 est une vue en plan de l'élément optique, qui est limité par le bord périphérique B. Dans ce cas, le substrat 10 comprend au moins deux portions de lentilles ophtalmiques qui sont référencées respectivement 11 et 12, et l'élément optique est conforme au mode de réalisation de l'invention qui a été décrit précédemment pour la portion de lentille 11. L'élément optique présente alors une première ou une seconde valeur de puissance pour un premier faisceau lumineux qui traverse la portion de lentille 11, en fonction de la commande appliquée au système de polarisation. Il présente en outre une troisième valeur de puissance optique pour un second faisceau lumineux qui traverse la portion de lentille 12. L'élément optique est alors un verre ophtalmique bifocal, dont l'une des portions constitutives présente une puissance optique variable.

Eventuellement, la première ou la seconde valeur de puissance optique d'un tel verre ophtalmique, qui est produite conformément à l'invention au niveau de la portion de lentille 11, peut être égale à la troisième valeur de puissance optique qui est produite au niveau de la portion de lentille 12. Le verre ophtalmique est alors bifocal dans l'un des états de commande du système de polarisation, alors qu'il est unifocal dans l'autre état de commande.

Une autre application de l'invention concerne l'obtention d'une lentille ophtalmique progressive à caractéristiques variables. Pour cela, la portion active 11 de l'élément optique, dans laquelle la puissance optique est variable, peut correspondre à la zone de vision de près de la lentille progressive. Le système de polarisation peut en outre être adapté pour produire, lorsqu'il est activé, une puissance optique qui décroit continûment entre un centre de la portion 11 et une limite de cette portion avec la portion inactive 12.

Il est entendu que l'invention peut être reproduite en modifiant plusieurs aspects du mode de réalisation qui a été décrit en détail ci-dessus. En particulier, les inventeurs citent les modifications suivantes, qui peuvent être introduites simplement à partir des indications contenues dans la description précédente :

- l'ensemble des cellules qui contiennent des mélanges de cristaux liquides peut être limité à l'intérieur d'une partie restreinte de la lentille 10 servant de substrat. Dans ce cas l'axe Z-Z ne correspond pas nécessairement à l'axe optique de la lentille 10, notamment si la partie de la lentille 10 dans laquelle l'invention est mise en oeuvre est décentrée ;

- le substrat peut être un prisme ou un miroir ;

- en ce qui concerne l'exemple comparatif, lorsque le système de polarisation électrique comporte deux réseaux d'électrodes, chaque réseau peut avoir une configuration quelconque, notamment pour définir un adressage de régions dans l'élément optique qui soit adapté à l'application envisagée. En particulier, l'un des réseaux d'électrodes peut définir un découpage angulaire du substrat autour du point A ; et

- le système de polarisation commandable peut être électrique à électrodes, mais aussi magnétique en utilisant des bobines de polarisation magnétique. Pour certains cristaux liquides dits à deux fréquences, ou «dual frequency», la commande d'orientation des cristaux liquides qui est produite par le système de polarisation peut aussi être basée sur des variations d'une fréquence d'un champ de polarisation.

## Revendications

1. Elément optique à puissance variable, comprenant :

   - un substrat (10) ;
   - un ensemble transparent de cellules (2) séparées et fermées, juxtaposées parallèlement à une face (S1) du substrat ;

- un système de polarisation commandable (5, 6, 100) adapté pour provoquer des changements entre une orientation homéotrope et une orientation planaire de cristaux liquides nématiques ou cholestériques contenus dans les cellules,

l'élément optique à puissance variable étant tel qu'au moins une cellule (20) située à proximité d'un point central (A) de la face du substrat (S1) contient un premier cristal liquide nématique ou cholestérique (CL1), et des cellules (21) situées à distance dudit point central contiennent un mélange dudit premier cristal liquide avec un second cristal liquide nématique ou cholestérique (CL2) différent dudit premier cristal liquide, une proportion dudit second cristal liquide par rapport audit premier cristal liquide dans le mélange à l'intérieur de chaque cellule (2) augmentant en fonction d'une distance radiale (r) entre ladite cellule et ledit point central de la face du substrat,

l'augmentation de ladite proportion dans chaque cellule (2) en fonction de la distance radiale (r) étant adaptée de sorte que ledit élément optique présente une première ou une seconde valeur de puissance optique pour un faisceau lumineux traversant l'ensemble de cellules, en fonction d'une commande appliquée au système de polarisation, et que le système de polarisation commandable comprend deux électrodes transparentes (5, 6) situées en vis-à-vis et s'étendant chacune parallèlement à la face (S1) du substrat, et l'ensemble de cellules (2) étant situé entre les deux électrodes de sorte que les dites électrodes produisent un champ électrique dans toutes les cellules lorsqu'une tension électrique est appliquée entre les dites électrodes,

et les premier (CL1) et second (CL2) cristaux liquides ont respectivement une première et une seconde anisotropie diélectrique avec des signes respectifs opposés,

le système étant agencé en outre pour qu'une variation de la tension électrique appliquée entre les deux électrodes provoque un changement entre une orientation du type planaire et une orientation du type homéotrope pour l'un parmi les premier et second cristaux liquides, et simultanément un changement inverse d'orientation entre les dits types pour l'autre des dits premier et second cristaux liquides, dans celles des cellules (20, 21) qui contiennent du premier cristal liquide sans second cristal liquide ou du second cristal liquide sans premier cristal liquide.

2. Elément optique selon la revendication 1, dans lequel au moins une cellule (20) située à proximité du point central (A) de la face du substrat contient du premier cristal liquide (CL1) sans contenir du second cristal liquide (CL2).

3. Elément optique selon la revendication 1 ou 2, dans lequel des cellules (21) situées au voisinage d'un bord périphérique (B) du substrat (10) contiennent du second cristal liquide (CL2) sans contenir du premier cristal liquide (CL1).

4. Elément optique selon l'une quelconque des revendications précédentes, dans lequel les premier (CL1) et second (CL2) cristaux liquides vérifient les conditions suivantes :

$$n_{o2} < (n_{o1} + n_{e1})/2$$

et

$$n_{o1} < (n_{o2} + n_{e2})/2$$

où

$n_{o1}$ et $n_{e1}$ sont respectivement des indices de réfraction lumineuse ordinaire et extraordinaire pour le premier cristal liquide, et

$n_{o2}$ et $n_{e2}$ sont respectivement des indices de réfraction lumineuse ordinaire et extraordinaire pour le second cristal liquide.

5. Elément optique selon l'une quelconque des revendications précédentes, comprenant en outre des portions (7) de surface d'ancrage des cristaux liquides à l'intérieur des cellules, adaptées pour fixer une orientation du premier (CL1) ou second (CL2) cristal liquide dans celles des cellules (20, 21) qui contiennent dudit cristal liquide sans contenir de l'autre cristal liquide, lorsque le système de polarisation commandable (5, 6, 100) n'est pas activé.

6. Elément optique selon la revendication 5, dans lequel lesdites portions de surface d'ancrage (7) sont adaptées de sorte que lorsque le système de polarisation commandable (5, 6, 100) n'est pas activé, l'orientation du premier cristal liquide (CL1) soit du type homéotrope ou du type planaire dans celles des cellules (20) qui contiennent du premier cristal liquide sans second cristal liquide, et l'orientation du second cristal liquide (CL2) soit simultanément de l'autre des dits types dans celles des cellules (21) qui contiennent dudit second cristal liquide sans premier cristal liquide.

**7.** Elément optique selon l'une quelconque des revendications précédentes, dans lequel le substrat (10) comprend une lentille optique ou une portion de lentille optique.

**8.** Elément optique selon la revendication 7, dans lequel le substrat (10) comprend une lentille ophtalmique ou une portion de lentille ophtalmique.

**9.** Elément optique selon la revendication 8, dans lequel :

le substrat (10) comprend au moins une première (11) et une seconde (12) portion de lentilles ophtalmiques, l'élément optique étant conforme à la revendication 1 pour la première portion de lentille (11), de sorte que ledit élément optique présente une première ou une seconde valeur de puissance optique pour un premier faisceau lumineux traversant la première portion de lentille, en fonction de la commande appliquée au système de polarisation, et

l'élément optique présentant en outre une troisième valeur de puissance optique pour un second faisceau lumineux traversant la seconde portion de lentille (12).

**10.** Elément optique selon la revendication 9, dans lequel l'une parmi les dites première et seconde valeurs de puissance optique est égale à ladite troisième valeur de puissance optique.

**Claims**

**1.** Variable power optical element, comprising:

- a substrate (10);
- a transparent set of cells (2) separated and closed, juxtaposed parallel to a face ($S_1$) of the substrate;
- a controllable polarization system (5, 6, 100) capable of causing changes between a homeotropic orientation and a planar orientation of nematic or cholesteric liquid crystals contained in the cells,

the optical element being such that at least one cell (20) situated close to a central point (A) of the face of the substrate (S1) contains a first nematic or cholesteric liquid crystal (CL1), and cells (21) situated at a distance from said central point contain a mixture of said first liquid crystal with a second nematic or cholesteric liquid crystal (CL2) different from said first liquid crystal, a proportion of said second liquid crystal in relation to said first liquid crystal in the mixture inside each cell (2) increasing as a function of a radial distance (r) between said cell and said central point of the face of the substrate,

the increase of said proportion in each cell (2) as a function of the radial distance (r) being adapted so that said optical element has a first or a second optical power value for a light beam passing through the cell set, as a function of a command applied to the polarization system,

and the controllable polarization system comprises two transparent electrodes (5, 6) facing each other and each extending parallel to the face ($S_1$) of the substrate, and the cell set (2) being situated between the two electrodes so that said electrodes produce an electric field in all the cells when an electrical voltage is applied between said electrodes,

and the first (CL1) and second (CL2) liquid crystals have respectively a first and a second dielectric anisotropy with opposite respective signs,

the system being arranged moreover so that a variation of the electrical voltage applied between the two electrodes causes a change between a planar type orientation and a homeotropic type orientation for one out of the first and second liquid crystals, and simultaneously a reverse change of orientation between said types for the other of said first and second liquid crystals, in those cells (20, 21) containing the first liquid crystal without the second liquid crystal or the second liquid crystal without the first liquid crystal.

**2.** Optical element according to claim 1, in which at least one cell (20) situated close to the central point (A) of the face of the substrate contains the first liquid crystal (CL1) without containing the second liquid crystal (CL2).

**3.** Optical element according to claim 1 or 2, in which cells (21) situated in the vicinity of a perimeter edge (B) of the substrate (10) contain the second liquid crystal (CL2) without containing the first liquid crystal (CL1).

4. Optical element according to any one of the preceding claims, in which the first (CL1) and second (CL2) liquid crystals comply with the following conditions:

$$n_{o2} < (n_{01} + ne2)/2$$

and

$$n_{o1} < (n_{02} + n_{e2})/2$$

where
$n_{o1}$ and $n_{e1}$ are respectively ordinary and extraordinary light-refractive indices for the first liquid crystal, and
$n_{o2}$ and $n_{e2}$ are respectively ordinary and extraordinary light-refractive indices for the second liquid crystal.

5. Optical element according to any one of the preceding claims, comprising moreover portions (7) of anchoring surface of the liquid crystals inside the cells, adapted to fix an orientation of the first (CL1) or second (CL2) liquid crystal in those cells (20, 21) containing said liquid crystal without containing the other liquid crystal, when the controllable polarization system (5, 6, 100) is not activated.

6. Optical element according to claim 5, in which said portions of anchoring surface (7) are adapted so that when the controllable polarization system (5, 6, 100) is not activated, the orientation of the first liquid crystal (CL1) is of the homeotropic type or of the planar type in those cells (20) containing the first liquid crystal without the second liquid crystal, and the orientation of the second liquid crystal (CL2) is simultaneously the other of said types in those cells (21) containing said second liquid crystal without the first liquid crystal.

7. Optical element according to any one of the preceding claims, in which the substrate (10) comprises an optical lens or a portion of an optical lens.

8. Optical element according to claim 7, in which the substrate (10) comprises an ophthalmic lens or a portion of an ophthalmic lens.

9. Optical element according to claim 8, in which:

the substrate (10) comprises at least a first (11) and a second (12) portion of ophthalmic lenses,
the optical element being according to claim 1 for the first lens portion (11), so that said optical element has a first or a second optical power value for a first light beam passing through the first lens portion, as a function of the command applied to the polarization system, and
the optical element having moreover a third optical power value for a second light beam passing through the second lens portion (12).

10. Optical element according to claim 11, in which one from said first and second optical power values is equal to said third optical power value.

**Patentansprüche**

1. Optisches Element mit variabler Brechkraft, umfassend:

- ein Substrat (10),
- eine durchsichtige Anordnung aus getrennten und geschlossenen Zellen (2), die parallel zu einer Oberfläche (S1) des Substrats aneinandergereiht sind,
- ein steuerbares/regelbares Polarisationssystem (5, 6, 100), welches dazu angepasst ist, Änderungen zwischen einer homöotropen Orientierung und einer planaren Orientierung von nematischen oder cholesterischen Flüssigkristallen hervorzurufen, die in den Zellen enthalten sind,

wobei das optische Element mit variabler Brechkraft derart ausgebildet ist, dass wenigstens eine Zelle (20), die in der Nähe von einem zentralen Punkt (A) der Oberfläche des Substrats (S1) angeordnet ist, einen ersten nematischen oder cholesterischen Flüssigkristall (CL1) enthält, und dass Zellen (21), die sich von dem zentralen Punkt entfernt befinden, eine Mischung von dem ersten Flüssigkristall mit einem zweiten nematischen oder cholesterischen Flüssigkristall (CL2) enthalten, der von dem ersten Flüssigkristall verschieden ist, wobei ein Anteil des zweiten Flüssigkristalls in Bezug zu dem ersten Flüssigkristall in der Mischung im Inneren von jeder Zelle (2) als Funktion von einem radialen Abstand (r) zwischen der Zelle und dem zentralen Punkt der Oberfläche des Substrats zunimmt,

wobei die Zunahme von dem Anteil in jeder Zelle (2) als Funktion des radialen Abstands (r) derart angepasst ist, dass das optische Element einen ersten oder einen zweiten Wert einer Brechkraft für einen die Anordnung von Zellen durchquerenden Lichtstrahl aufweist, als Funktion von einer Steuerung/Regelung, die auf das Polarisationssystem angewendet wird,

dass das steuerbare/regelbare Polarisationssystem zwei transparente Elektroden (5, 6) aufweist, die sich einander gegenüber befinden und sich jeweils parallel zu der Oberfläche (S1) des Substrats erstrecken, und die Anordnung von Zellen (2) zwischen den zwei Elektroden derart gelegen ist, dass die Elektroden ein elektrisches Feld in allen Zellen erzeugen, wenn eine elektrische Spannung zwischen den Elektroden angelegt wird,

und der erste (CL1) und der zweite (CL2) Flüssigkristall eine erste bzw. eine zweite dielektrische Anisotropie mit jeweiligen entgegengesetzten Vorzeichen aufweisen,

wobei das System weiterhin dafür eingerichtet ist, dass eine Variation der zwischen den zwei Elektroden angelegten elektrischen Spannung eine Veränderung zwischen einer Orientierung vom planaren Typ und eine Orientierung vom homöotropen Typ für einen von dem ersten und dem zweiten Flüssigkristall hervorruft, und gleichzeitig eine umgekehrte Änderung in der Orientierung zwischen den Typen für den anderen von dem ersten und dem zweiten Flüssigkristall hervorruft, in den Zellen (20, 21), welche ersten Flüssigkristall ohne zweiten Flüssigkristall oder zweiten Flüssigkristall ohne ersten Flüssigkristall enthalten.

2.  Optisches Element nach Anspruch 1, wobei wenigstens eine Zelle (20), die in der Nähe des zentralen Punkts (A) der Oberfläche des Substrats gelegen ist, ersten Flüssigkristall (CL1) enthält, ohne zweiten Flüssigkristall (CL2) zu enthalten.

3.  Optisches Element nach Anspruch 1 oder 2, wobei die Zellen (21) die in der Nachbarschaft von einem Umfangsrand (B) des Substrats (10) gelegen sind, zweiten Flüssigkristall (CL2) enthalten, ohne ersten Flüssigkristall (CL1) zu enthalten.

4.  Optisches Element nach einem der vorhergehenden Ansprüche, wobei der erste (CL1) und der zweite (CL2) Flüssigkristall die folgenden Bedingungen erfüllen:

$$n_{o2} < (n_{o1} + n_{e1})/2$$

und

$$n_{o1} < (n_{o2} + n_{e2})/2,$$

wobei
$n_{o1}$ bzw. $n_{e1}$ der ordentliche bzw. außerordentliche Lichtbrechungsindex für den ersten Flüssigkristall ist, und
$n_{o2}$ bzw. $n_{e2}$ der ordentliche bzw. außerordentliche Lichtbrechungsindex für den zweiten Flüssigkristall ist.

5.  Optisches Element nach einem der vorhergehenden Ansprüche, weiterhin umfassend Verankerung-Oberflächenabschnitte (7) für die Flüssigkristalle im Inneren der Zellen, die dazu angepasst sind, eine Orientierung des ersten (CL1) oder zweiten (CL2) Flüssigkristalls in denjenigen der Zellen (20, 21) zu fixieren, welche den einen Flüssigkristall enthalten, ohne den anderen Flüssigkristall zu enthalten, wenn das steuerbare/regelbare Polarisationssystem (5, 6, 100) nicht aktiviert ist.

6.  Optisches Element nach Anspruch 5, wobei die Verankerung-Oberflächenabschnitte (7) derart angepasst sind, dass dann, wenn das steuerbare/regelbare Polarisationssystem (5, 6, 100) nicht aktiviert ist, die Orientierung des ersten Flüssigkristalls (CL1) vom homöotropen Typ oder vom planaren Typ in denjenigen der Zellen (20) ist, die ersten Flüssigkristall ohne zweiten Flüssigkristall enthalten, und die Orientierung von dem zweiten Flüssigkristall (CL2) in denjenigen der Zellen (21), die zweiten Flüssigkristall ohne ersten Flüssigkristall enthalten, gleichzeitig vom anderen dieser Typen ist.

7. Optisches Element nach einem der vorhergehenden Ansprüche, wobei das Substrat (10) eine optische Linse oder einen Abschnitt einer optischen Linse umfasst.

8. Optisches Element nach Anspruch 7, wobei das Substrat (10) eine ophthalmische Linse oder ein Abschnitt einer ophthalmischen Linse umfasst.

9. Optisches Element nach Anspruch 8, wobei:

das Substrat (10) wenigstens einen ersten (11) und einen zweiten (12) ophthalmischen Linsenabschnitt umfasst, das optische Element für den ersten Linsenabschnitt (11) derart Anspruch 1 entspricht, dass das optische Element für einen ersten Lichtstrahl, der den ersten Linsenabschnitt durchquert, als Funktion der Steuerung/Regelung, die auf das Polarisationssystem angewendet wird, einen ersten oder einen zweiten Wert einer Brechkraft aufweist, und
das optische Element weiterhin einen dritten Wert einer Brechkraft für einen zweiten Lichtstrahl aufweist, der den zweiten Linsenabschnitt (12) durchquert.

10. Optisches Element nach Anspruch 9, wobei einer von dem ersten und zweiten Wert der Brechkraft gleich dem dritten Wert der Brechkraft ist.

FIG.1.

FIG.2a.

FIG.2b.

FIG.3.

FIG.4.

**EP 2 366 125 B1**

## RÉFÉRENCES CITÉES DANS LA DESCRIPTION

**Documents brevets cités dans la description**

- FR 2907559 A